# EUROPÄISCHE PATENTANMELDUNG

(11) **EP 4 475 140 A1**
(43) Veröffentlichungstag der Anmeldung: **11.12.2024**
(21) Anmeldenummer: 24181026.6
(22) Anmeldetag: 10.06.2024
(51) Int. Cl.: G21F 9/30, G21F 9/28, B09B 3/00, B09B 3/40, C22B 7/00

(54) **VERFAHREN ZUR BEARBEITUNG AKTIVIERTER UND/ODER KONTAMINIERTER METALLISCHER RESTSTOFFE UND VERWENDUNG VON BIG BAGS**

(30) Priorität: 09.06.2023 DE 102023115174
(71) Anmelder: Dornier Nuclear Services GmbH, 01097 Dresden (DE)
(72) Erfinder: ANTHOFER, Anton Philipp, 01097 Dresden (DE); SCHENKER, Saskia, 01097 Dresden (DE); BOLDAU, Hans-Ulrich, 07613 Silbitz (DE); TIEFEL, Torsten, 07613 Silbitz (DE)
(74) Vertreter: Gottfried, Hans-Peter

(57) **Zusammenfassung**

Verfahren zur Bearbeitung aktivierter und/oder kontaminierter metallischer Reststoffe. Nach der Erfindung sind die Verfahrensschritte: Einlegen von aktivierten und/oder kontaminierten Reststoffe in einer für ionisierende Strahlung durchlässigen Verpackung; Herstellen einer gegen Kontaminationsverschleppung gesicherten Packung durch zumindest staubdichtes Verschließen der befüllten Verpackung; Messung der Stärke der aus der Aktivierung und/oder Kontaminierung resultierenden ionisierenden Strahlung; mehrfache Wechsel der Position der Packung, sodass der Einfluss einzelner Kontaminationen und/oder Aktivierungen als Quellen der ionisierenden Strahlung eine entsprechende Gewichtung erfährt; Feststellung einer Unterschreitung eines Grenzwerts der Packung, der über dem einer uneingeschränkten Freigabe festgelegt ist; Einschmelzen der Packung zu einem aus der Schmelze hergestellten Erzeugnis umfasst. Verwendung von Big Bags aus einem brennbaren Material zur Verpackung kontaminierter metallischer Reststoffe.

## Beschreibung

Die Erfindung betrifft ein Verfahren zur Bearbeitung aktivierter und/oder kontaminierter metallischer Reststoffe und eine Verwendung von Big Bags aus einem brennbaren Material.

Beim Abbau kerntechnischer Anlagen werden viele Systeme und Komponenten demontiert, die aktivierter oder kontaminiert sind oder bei denen eine Aktivierung oder Kontamination angenommen werden muss. Nach dem Stand der Technik werden die Systeme und Komponenten in der Regel in handhabbare Stücke zerlegt, messtechnisch auf Radioaktivität geprüft und anschließend dekontaminiert. Die Dekontamination erfolgt in der Regel mit abtragenden mechanischen oder chemischen Verfahren. Weit verbreitet sind für metallische Komponenten das Strahlen mit Sand oder Stahlschrot, die Schaum- oder Geldekontamination mit starken Redoxagentien sowie die Tauchdekontamination in sauren, basischen oder Redox-aktiven Lösungen.

Eine solche Lösung beschreibt die Druckschrift DE 20 2014 001 542 U1. Aufgrund des Zusammenwirkens hoher mechanischer Kräfte und sehr feinen Stäuben ist die Tätigkeit aus Sicht des Strahlenschutzes als gefährlich hinsichtlich externer und interner Exposition zu bewerten. Zudem wird weiteres, schwerer handhabbares kontaminiertes Material erzeugt.

Die Druckschrift DE 20 2014 001 542 U1 offenbart weiterhin eine dreidimensionale Vermessung des einzelnen kontaminierten Werkstücks (z. B. mit einer fotogrammetrischen Methode oder Laserscan) und vorgeschaltet eine ortsauflösende Messung der Kontamination. Entsprechend der kombinierten Informationen aus Geometrie und Kontaminationsverteilung erfolgt dann die Dekontamination. Eine solche Methode ist sehr aufwändig.

Die Druckschrift DE 33 31 383 A1 befasst sich ebenfalls mit dem Einschmelzen von metallischen Komponenten von Kernkraftwerken und stellt hierzu eine Zerkleinerungsanlage für die metallischen Komponenten, eine Transporteinrichtung und einen Schmelzofen für das zerkleinerte Gut, eine Einrichtung für die Behandlung des erschmolzenen Gutes bis zur Erstarrung und eine Einrichtung für den Abtransport des erstarrten Gutes. Die Anlage ist gekennzeichnet durch zumindest einen Container für die Aufnahme des zerkleinerten Gutes, einen Elektroschmelzofen mit Kopfbeschickeinrichtung, eine als Horizontalstranggießanlage mit Strangausziehvorrichtung ausgebildete Einrichtung für die Behandlung des erschmolzenen Gutes bis zur Erstarrung und eine Trennmaschine für die Zerlegung des Stranges in abtransportfähige Strangabschnitte. Zum Umgang mit und zu der Klassifizierung von kontaminierten Teilen schweigt die Druckschrift hingegen.

Eine mobile Anlage zur Verarbeitung von radioaktivem Abfall durch Einschmelzen in einen Abfallkörper, einen Glasblock ist aus der Druckschrift AT 517861 A1 bekannt. Das Einschmelzen erfolgt aber nur zur Sicherung gegen eine Kontaminationsverschleppung, ohne dass ein verwendbares Material oder Erzeugnis hergestellt wird.

Aus der Druckschrift DE 26 38 174 A1 ist ein weiteres Verfahren zur Entsorgung aktivierter und/oder kontaminierter Teile eines Kernkraftwerkes bekannt. Hierbei ist vorgesehen, dass während der Entsorgung notwendige Behandlungen wie Zerspanen, Trenn- und Brennschneiden, Pressen, Einschmelzen, Tiefgefrieren, Brechen, chemische Behandlung, Dekontaminierung und Verpackung durchgeführt werden. Für die dazu notwendigen Behandlungssysteme wird vorgeschlagen, sie in mobilen, transportierbaren, untereinander koppelbaren Containern anzuordnen, die ihrerseits in einem erweiterungsfähigen bunkerähnlichen Gebäude austauschbar angeordnet sind.

Eine weitere Anlage für die Rückgewinnung radioaktiver und/oder radioaktiv kontaminierter metallischer Komponenten aus funktionsuntüchtigen Aggregaten von Kernkraftwerken, wie sie z. B. beim Abriss von Kernkraftwerken anfallen, ist aus der Druckschrift DE 34 04 106 A1 bekannt. Auch hier ist eine Zerkleinerungsanlage für die metallischen Komponenten, ein Transportbehälter für das zerkleinerte Gut, ein Elektroschmelzofen mit Absaugeinrichtung, eine Einrichtung für die Behandlung des erschmolzenen Gutes bis zur Erstarrung und eine Einrichtung für den Abtransport des erstarrten Gutes vorgesehen. Das zerkleinerte Gut ist mit Hilfe des Transportbehälters in den Elektroschmelzofen einführbar. Der Transportbehälter ist zugleich als nichtmetallischer Schmelztiegel gestaltet, der in den Elektroschmelzofen einführbar ist. Der Elektroschmelzofen ist als Induktionsofen ausgeführt, der eine Auffangwanne für bei Schmelztiegelbruch auslaufende Schmelze aufweist. Auch hier werden die Messung der Aktivität, der Umgang mit und der Klassifizierung von kontaminierten Teilen bzw. dem erschmolzenen Erzeugnis nicht betrachtet.

Ein weiteres mobiles Schmelzverfahren für radioaktiv belastetes Material und die zugehörige Schmelzeinrichtung ist aus der Druckschrift DE 10 2013 100 463 B3 bekannt, einschließlich einer mobilen Schmelzeinrichtung mit einer Tiegelbasis und einer Tiegelkammer, die zur Aufnahme eines Tiegels geeignet ist. Vorgeschlagen wird, dass die Tiegelbasis einen Kammerboden und die Tiegelkammer eine Hülle umfasst, wobei die Einrichtung ferner eine Transporteinrichtung umfasst, welche geeignet ist, die Tiegelbasis mit dem Tiegel von einer ersten Position an eine zweite Position zu bewegen. Der Tiegel befindet sich in der ersten Position außerhalb der Tiegelkammer und in der zweiten Position innerhalb der Tiegelkammer. Der Tiegel kann mittels der Transporteinrichtung aufwärts in die Tiegelkammer gehoben werden. Der Kammerboden und die Hülle sind so ausgestaltet, dass sie in der zweiten Position ein gasdichtes Ofengehäuse ausbilden. Hierbei ist ebenfalls keine Messung der Strahlungswerte thematisiert, allerdings wird auf mittelschwer kontaminierte Schrotte und hoch radioaktiven Schrott abgestellt. Diese Schrotte können nicht mehr in den normalen Materialkreislauf zurückgeführt werden und müssen in einem Endlager entsorgt werden. Um die Endlagerkosten möglichst gering zu halten, ist es erforderlich, das Volumen des anfallenden Schrottes durch Einschmelzen in einen massiven Block zu konsolidieren. Das Schmelzen muss daher unter besonderen Bedingungen erfolgen, die eine Emission unterbinden. Jedenfalls wird kein verwendbares Material oder Erzeugnis hergestellt.

Die Druckschrift US 5 037 159 A beschreibt ein Verfahren und eine Vorrichtung zum Aufsaugen und Verpacken von partikelförmigen Materialien, z. B. von gefährlichem, strahlungsbelastetem Betonstaub, der bei der Bearbeitung von Fußböden anfällt, um zu verhindern, dass selbst kleine Mengen des Materials in die Umgebungsluft gelangen. Jede Trommel wird mit ihrer offenen Mündung dicht neben dem nach unten gerichteten Materialauslass des Vakuumsammelsystems aufgestellt. Die Abdeckung des Materialauslasses wird an diesen angedrückt, während der gefüllte Behälter abgedeckt und durch einen leeren Behälter ersetzt wird. Der Einwegdeckel wird dann in den zweiten Behälter geworfen, nachdem er zum Befüllen auf ähnliche Weise mit dem Vakuumsystem versiegelt wurde. Über den weiteren Fortgang, insbesondere die Entsorgung des gefüllten Behälters, ist nichts ausgeführt.

Die Druckschrift EP 2 833 367 B1 offenbart eine Anlage zur Bearbeitung von aktivierten, kontaminierten und/oder nicht kontaminierten Reststoffen und macht als Nachteil des Stands der Technik bereits aus, dass die Reststoffbehandlung nicht entkoppelt vom Rückbau der kerntechnischen Anlagen erfolgt, sondern unmittelbar vor Ort. Damit könne eine Anlage für die Bearbeitung kontaminierter Reststoffe lediglich für den Rückbau einer einzigen Anlage und entsprechend deren Kapazität und der Platzverhältnisse genutzt werden. Deshalb wird eine modular aufgebaute, erneut einsetzbare Anlage vorgeschlagen. In der Einleitung wird in Absatz [0003] ausgeführt, dass der größte Teil dieser Materialien, ca. 70 %, entweder über die direkte Entscheidungsmessung oder über das Einschmelzen der uneingeschränkten Freigabe zugeführt werden. Es ist jedoch mit einem hohen Aufwand verbunden, jedes einzelne Teil einer Entscheidungsmessung zu unterziehen.

Es ist daher Aufgabe der vorliegenden Erfindung, ein einfaches Verfahren mit verringertem Aufwand anzubieten, mit dem aktivierte und/oder kontaminierte metallische Reststoffe insbesondere durch Einschmelzen in der Weise bearbeitet werden, dass ein Erzeugnis mit unbeschränkter Verwendbarkeit entsteht.

Die Aufgabe wird gelöst durch ein Verfahren zur Bearbeitung aktivierter und/oder kontaminierter metallischer Reststoffe, gekennzeichnet durch die Verfahrensschritte a bis h.

Schritt a) beinhaltet Sammlung und Dokumentation der aktivierten und/oder kontaminierten und/oder nicht aktivierten und/oder nicht kontaminierten, vorzugsweise auf Ofenmaß zerlegten metallischen Reststoffe unterhalb der Grenzwerte einer Freigabe. Durch eine Zerlegung auf Ofenmaß wird erreicht, dass keine Beschädigungen am Schmelzofen befürchtet werden müssen. Die Reststoffe weisen eine Radioaktivität unterhalb der Grenzwerte der uneingeschränkten Freigabe auf. Die Grenzwerte richten sich nach der Art der Strahlung und der jeweils gültigen amtlichen Vorgabe. Eine Dekontamination der Oberfläche erfolgt nicht, was den Aufwand für Verarbeitung bzw. Entsorgung erheblich senkt.

Schritt b) beinhaltet das Einlegen der aktivierten und/oder kontaminierten Reststoffe in eine für ionisierende Strahlung durchlässige und zudem staubdichte Verpackung. Diese Durchlässigkeit ermöglicht eine spätere ungehinderte Messung der emittierten ionisierenden Strahlung.

Schritt c) beinhaltet das Herstellen eines gegen Kontaminationsverschleppung gesicherten Gebindes durch Verschließen der befüllten Verpackung. Damit wird ein zumindest staubdichtes, insbesondere kontaminationsdichtes Einschließen erreicht, sodass keine auf den Oberflächen der verpackten Teile anhaftende Kontamination mit der typischen granulometrischen Beschaffenheit herausdringen kann. Auf diese Weise werden die Einzelteile im Verbund einfacher handhabbar und sind vor allem gegen ein Verschleppen auf den Oberflächen anhaftender Kontamination geschützt. Beide Effekte tragen zu einer deutlich erhöhten Effizient der Entsorgung bzw. Verwertung bei.

Schritt d) beinhaltet die Messung der Stärke der aus der Aktivierung und/oder Kontaminierung resultierenden ionisierenden Strahlung mittels wenigstens einem Detektor. Dies geschieht vorzugsweise durch Freimessen in einer Freimessanlage, alternativ auch manuell oder auf andere geeignete Weise, wobei die Oberflächenkontamination den Messwert beeinflusst.

Schritt e) beinhaltet einen Wechsel der Position der Packung, sodass der Einfluss einzelner, insbesondere äußerlicher Kontaminationen und/oder Aktivierungen als Quellen der ionisierenden Strahlung eine entsprechende Gewichtung erfährt, ohne dass eine konkret ortsauflösende Messung der Kontamination vorgenommen wird oder erforderlich wäre. Dadurch kann mit geringem Aufwand eine umfassende Betrachtung der Radioaktivität des gesamten Gebindes erreicht werden.

Schritt f) beinhaltet die mehrfache Ausführung der Verfahrensschritte d) und e), um durch den Positionswechsel und die darauffolgende Messung sowie deren Auswertung eine eingehende und sichere Betrachtung der Radioaktivität des gesamten Gebindes zu erreichen.

Schritt g) beinhaltet die Feststellung einer Unterschreitung eines Grenzwerts der Packung, der über dem einer uneingeschränkten Freigabe festgelegt ist. Sollte dieser ausnahmsweise überschritten werden, kann das Gebinde auch zurückgegeben und geöffnet werden, um das ursächliche Teil auszusondern, um es zu reinigen oder einem anderen Entsorgungsweg zuzuführen.

Schritt h) beinhaltet Einschmelzen der Packung, ohne das Erfordernis, ein Mindestmischungsverhältnis mit anderen, nicht kontaminierten Materialien einzuhalten, zu einem aus der Schmelze hergestellten Erzeugnis. Dabei soll insbesondere ein Werkstoff oder Halbzeug hergestellt werden.

Auf eine abschließende Feststellung einer Unterschreitung eines Grenzwerts kann verzichtet werden, was seinerseits zu einer erhöhten Effizient und einem verringerten Aufwand führt. Das Mindestmischungsverhältnis und die Demobilisierung von Kontamination gewährleisten die nötige Sicherheit.

Sollte bei der Messung eines Gebindes festgestellt werden, dass der integrale Grenzwert überschritten wird, so wird das Gebinde einer anderweitigen Entsorgung als radioaktiver Abfall zugeführt oder nach einer nochmaligen Sichtprüfung das für die Überschreitung ursächliche Reststoffteil ausgesondert und das Gebinde neu zusammengestellt.

Die herkömmlichen Aufbereitungsschritte, die zu einer uneingeschränkten Freigabe führen, jedoch viele Ressourcen kosten und vor allem mit einem hohen Arbeitsaufwand verbunden sind, werden durch das erfindungsgemäße Verfahren substituiert. Insbesondere die für eine uneingeschränkte Freigabe erforderliche direkte Messung aller Oberflächen gestaltet sich bei den in der Praxis anfallenden Reststoffen häufig schwierig. Durch die im Rahmen des erfindungsgemäßen Verfahrens anzuwendende Messung zur uneingeschränkten Freigabe, bei der die Messung mit Abstand - bei entsprechend hohen Sicherheitsabschlägen - vorgenommen wird, führt zu einer gemeinsamen Betrachtung von Oberfläche und Volumen, vor allem aber zu einer vereinfachten Ermittlung des integralen Messwerts. Die Messung mit Abstand im Sinne der Erfindung umfasst ebenso eine Messung direkt am Gebinde, z. B. einem BigBag, mit dem Abstand null.

Die gemessene Radioaktivität der Reststoffe rührt vorzugsweise aus einer Aktivierung des Materials und/oder durch eine radioaktive Verschmutzung der Oberfläche her. Die ionisierende Strahlung geht von dem aktivierten Material und/oder der Verschmutzung der Oberfläche aus.

Die Messung der Stärke der ionisierenden Strahlung erfolgt vorteilhafterweise durch Freimessen in einer Freimessanlage, alternativ auch manuell oder durch eine von einem Manipulator geführte Messeinrichtung. Letztere kann dann auch die Position der Messeinrichtung unmittelbar bestimmen und in die Ermittlung der Gesamtaktivität a des Gebindes einfließen lassen. Die Freimessung erfolgt vorzugsweise über mehrere Detektoren oder über mehrere Messungen mit einem Detektor, der auch durch den Manipulator geführt sein kann, der dann die jeweilige Messposition selbst mit erfasst.

Es hat sich als vorteilhaft erwiesen, wenn beispielsweise 6 Messungen in unterschiedlichen Positionen durchgeführt werden.

Es hat sich als vorteilhaft erwiesen, wenn die Gesamtaktivität des Gebindes aus den Messwerten der ionisierten Strahlung unter Berücksichtigung der Position, insbesondere der Entfernung zu einem Punkt des Gebindes oder direkt am Gebinde, des wenigstens einen Detektors ermittelt wird. Vorzugsweise wird die Gesamtaktivität a des Gebindes aus der Bruttozählrate aller Positionen des wenigstens einen Detektors durch Mittelung, Integration oder über einen anderen mathematischen Zusammenhang errechnet.

Es ist nach der Erfindung auch vorgesehen, zusammen mit den aktivierten und/oder kontaminierten Reststoffen auch nicht aktivierte und/oder nicht kontaminierte Reststoffe nach dem erfindungsgemäßen Verfahren zu bearbeiten.

Es hat sich als vorteilhaft erwiesen, wenn als staubdichte Verpackung ein Big Bag aus einem brennbaren, staubdichten Material verwendet wird. Big Bags sind allgemein verfügbar und kostengünstig. Sie bestehen in der Regel aus einer Kunststofffolie, die brennbar ist und im Schmelzprozess rückstandsfrei verbrennt.

Ein weiterer Aspekt der Erfindung betrifft die Verwendung von Big Bags aus einem brennbaren Material, wobei die Big Bags zur Verpackung kontaminierter metallischer Reststoffe in einem Verfahren nach einem der Ansprüche 1 bis 8 eingesetzt und insbesondere zusammen mit dem Packgut einer Schmelze zugeführt werden.

Anhand der Beschreibung von Ausführungsbeispielen und ihrer Darstellung in der zugehörigen Zeichnung wird die Erfindung nachfolgend näher erläutert.

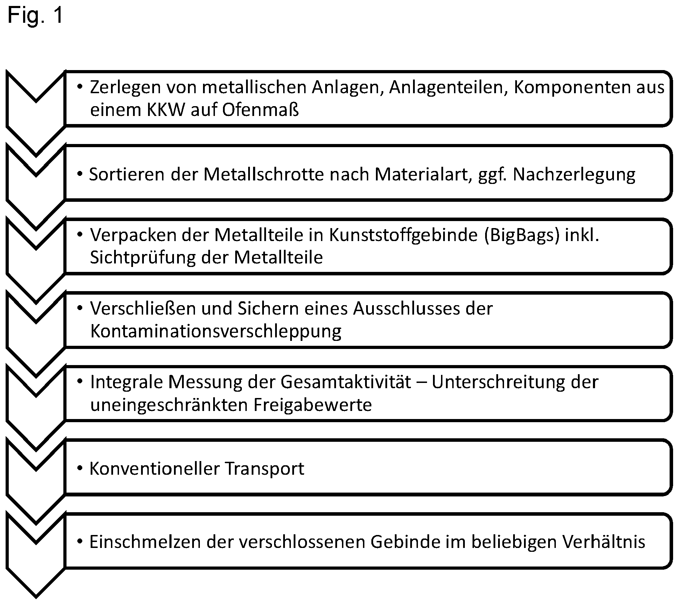

Fig. 1 zeigt schematisch eine Ausführungsform eines erfindungsgemäßen Verfahrensablaufs mit den Schritten
- Zerlegen von metallischen Anlagen, Anlagenteilen, Komponenten aus einem Kernkraftwerk (KKW) auf Ofenmaß,
- Sortieren der Metallschrotte nach Materialart, ggf. Nachzerlegung,
- Verpacken der Metallteile in Kunststoffgebinde (BigBags) inkl. Sichtprüfung der Metallteile,
- Verschließen und Sichern eines Ausschlusses der Kontaminationsverschleppung,
- Integrale Messung der Gesamtaktivität - Unterschreitung der uneingeschränkten Freigabewerte,
- Konventioneller Transport,
- Einschmelzen der verschlossenen Gebinde im beliebigen Verhältnis.

Beim Rückbau eines Kernkraftwerks (KKW) erfolgt unter anderem das Zerlegen von metallischen Anlagen, Anlagenteilen, Komponenten. Diese werden auf Ofenmaß zerlegt, d. h. auf eine Größe, in der sie später in einen Schmelzofen eingebracht werden können, ohne diesen zu beschädigen.

Danach erfolgt das Sortieren der Metallschrotte nach Materialart, ggf. auch eine Nachzerlegung. Bei der Sortierung werden dann bereits diejenigen Schrottteile für die nachfolgenden Verfahrensschritte ausgewählt, bei denen kein Erfordernis der Entsorgung als radioaktiver Abfall zu erwarten ist. Die Nachzerlegung ist besonders wichtig, wenn sich geschlossene oder mit Flüssigkeit gefüllte Behälter unter dem Schrott befinden. Werden solche Behälter nicht geöffnet und entleert, kann es im Schmelzofen zu einer Explosion kommen.

Der folgende Schritt umfasst das Einlegen der Metallteile in eine Verpackung, beispielsweise aus Kunststoff (vorzugsweise BigBags), einschließlich einer weiteren Sichtprüfung der Metallteile.

Sobald die Metallteile eingelegt sind, erfolgt das Verschließen und Sichern der Verpackung, sodass ein Gebinde gebildet wird. Dieses ist dann zumindest staubdicht, sodass eine Kontaminationsverschleppung durch austretenden radioaktiven Staub, der an den Metallteilen anhaftet, ausgeschlossen werden kann.

An dem derart verschlossenen Gebinde erfolgt dann eine integrale Messung der Gesamtaktivität, indem vorzugsweise von mehreren Seiten und in unterschiedlichen Abständen die ionisierende Strahlung gemessen wird. Die Messwerte werden dann aufgrund der Position des Detektors, dessen Abstand zum Gebinde und der Stärke der ionisierenden Strahlung zu einer Gesamtaktivität zusammengefasst. Dabei wird eine Unterschreitung der uneingeschränkten Freigabewerte für diese Gesamtaktivität festgestellt.

Infolge der dann uneingeschränkten Freigabe können die Gebinde mittels konventionellem Transport zum Schmelzofen transportiert werden. Dort erfolgt ein Einschmelzen der verschlossenen Gebinde im beliebigen Verhältnis mit anderen Schrottteilen oder auch ohne Vermischung.

## Patentansprüche

1. Verfahren zur Bearbeitung aktivierter und/oder kontaminierter metallischer Reststoffe, **gekennzeichnet durch** die Verfahrensschritte
a. Sammlung und Dokumentation der aktivierten und/oder kontaminierten und/oder nicht aktivierten und/oder nicht kontaminierten, auf Ofenmaß zerlegten metallischen Reststoffe unterhalb der Grenzwerte der spezifischen Freigabe;
b. Einlegen der aktivierten und/oder kontaminierten Reststoffe in eine für ionisierende Strahlung durchlässige, staubdichte Verpackung;
c. Herstellen einer gegen Kontaminationsverschleppung gesicherten Packung durch zumindest staubdichtes Verschließen der befüllten Verpackung;
d. Messung der Stärke der aus der Aktivierung und/oder Kontaminierung resultierenden ionisierenden Strahlung;
e. Wechsel der Position der Packung, sodass der Einfluss einzelner Kontaminationen und/oder Aktivierungen als Quellen der ionisierenden Strahlung eine entsprechende Gewichtung erfährt;
f. mehrfache Ausführung der Verfahrensschritte d) und e);
g. Feststellung einer Unterschreitung eines Grenzwerts der Packung, der über dem einer uneingeschränkten Freigabe festgelegt ist;
h. Einschmelzen der Packung zu einem aus der Schmelze hergestellten Erzeugnis.

2. Verfahren nach Anspruch 1, wobei die Radioaktivität der Reststoffe aus einer Aktivierung des Materials und/oder durch eine radioaktive Verschmutzung der Oberfläche herrührt, und wobei die ionisierende Strahlung von dem aktivierten Material und/oder der Verschmutzung der Oberfläche ausgeht.

3. Verfahren nach einem der vorherigen Ansprüche, wobei die Messung der Stärke der ionisierenden Strahlung durch Freimessen erfolgt.

4. Verfahren nach Anspruch 3, wobei die Freimessung über mehrere Detektoren oder über mehrere Messungen mit einem Detektor erfolgt.

5. Verfahren nach Anspruch 3 oder 4, wobei 6 Messungen in unterschiedlichen Positionen durchgeführt werden.

6. Verfahren nach Anspruch 4 oder 5, wobei die Gesamtaktivität des Gebindes aus den Messwerten der ionisierten Strahlung unter Berücksichtigung der Position des wenigstens einen Detektors ermittelt wird.

7. Verfahren nach Anspruch 3, wobei die Gesamtaktivität a des Gebindes aus der Bruttozählrate aller Positionen des wenigstens einen Detektors durch Mittelung oder Integration errechnet wird.

8. Verfahren nach einem der vorherigen Ansprüche, wobei als staubdichte Verpackung ein Big Bag aus einem brennbaren und staubdichten Material verwendet wird.

9. Verwendung von Big Bags aus einem brennbaren Material, **dadurch gekennzeichnet, dass** die Big Bags zur Verpackung aktivierter und/oder kontaminierter metallischer Reststoffe in einem Verfahren nach einem der Ansprüche 1 bis 8 eingesetzt und insbesondere zusammen mit dem Packgut einer Schmelze zugeführt werden.
